# EUROPÄISCHE PATENTSCHRIFT

(11) **EP 1 230 014 B1**
(45) Veröffentlichungstag und Bekanntmachung des Hinweises auf die Patenterteilung: **09.08.2006**
(21) Anmeldenummer: 00984864.9
(22) Anmeldetag: 18.10.2000
(51) Int. Cl.: B01J 19/00, C12Q 1/68

(54) **VORRICHTUNG UND VERFAHREN ZUR HYBRIDISIERUNG DOPPELSTRÄNGIGER DNA-PROBEN AN OLIGOMER-ARRAYS**
DEVICE AND METHOD FOR HYBRIDIZING DOUBLE-STRANDED DNA SAMPLES ON OLIGOMER ARRAYS
DISPOSITIF ET PROCEDE D'HYBRIDATION D'ECHANTILLONS D'ADN A DEUX BRINS SUR DES JEUX ORDONNES OLIGOMERIQUES

(30) Priorität: 26.10.1999 DE 19952723
(43) Veröffentlichungstag der Anmeldung: 14.08.2002
(73) Patentinhaber: Epigenomics AG, 10178 Berlin (DE)
(72) Erfinder: OLEK, Alexander, 10115 Berlin (DE)
(74) Vertreter: Schubert, Klemens
(86) Internationale Anmeldenummer: PCT/DE2000/003771
(87) Internationale Veröffentlichungsnummer: WO 2001/030489

(56) Entgegenhaltungen:
- EP-A- 0 875 584
- WO-A-98/28438
- US-A- 5 466 603
- US-A- 5 741 647
- US-A- 5 958 760

## Beschreibung

Die Erfindung betrifft eine Vorrichtung und ein Verfahren zur Hybridisierung doppelsträngiger DNA-Proben an Oligomer-Arrays.

Hybridisierungen von Proben-DNA auf Oligomer Chips, beispielsweise Oligonukleotid-Arrays, werden zum Nachweis bestimmter Sequenzen in der Proben-DNA durchgeführt. Ein möglicher Ansatz, "Sequencing by hybidisation(SBH)", ermittelt dabei sogar die vollständige Sequenz der Proben-DNA oder zumindest großer Teile davon. Allelspezifische Hybridisierungen werden jedoch auch ausgeführt, um bestimmte Veränderungen in der Proben-DNA, z. B. Punktmutationen, nachzuweisen. Die Proben-DNA liegt jedoch, da sie zumeist vorher mittels PCR amplifiziert wurde, in der Regel doppelsträngig vor, damit steht sie im wesentlichen einer Hybridisierung mit den Oligomeren nicht mehr zur Verfügung. Die vorliegende Erfindung beschreibt eine Vorrichtung, die zur effizienten Hybridisierung doppelsträngiger DNA an Oligomer Arrays dient.

Im Stand der Technik sind eine Reihe von Hybridisierungskammern bekannt. So beschreiben die US-A 5,100,775, US-A 5,360,741 oder US-A 5,966,603 Hybridisierungskammern, welche für die unterschiedlichsten Zwecke und Bedürfnisse angepaßt sind. Derartige Hybridisierungskammern werden inzwischen vielfach kommerziell angeboten, sind aber im Allgemeinen nicht separat temperierbar. Auch sind für die Aufnahme von Objektträgern geeignete Hybridisierungskammern bekannt. Weiterhin gibt es an den Rändern selbstklebende Folien, die durch das Aufkleben auf Objektträger Hybridisierungskammern bilden können. Bekannt ist auch eine pneumatisch ansteuerbare und temperierbare Hybridisierungskammer, bei der die Hybridisierungseigenschaften durch die Bewegung der Hybridisierungsflüssigkeit verbessert sein sollen.

Alle diese Vorrichtungen erfordern jedoch, daß die doppelsträngige Proben-DNA vor der Hybridisierung entweder thermisch denaturiert wird, einer der Stränge selektiv zuvor abgetrennt wird (z.B. kann ein Primer in der PCR mit Biotin markiert.sein und in einem nachfolgenden Schritt durch Bindung an Streptavidin selektiv ein Strang aus der Lösung entfernt werden) oder aber durch enzymatische Verfahren ein Strang im Überschuß erzeugt wird, damit die an den Oligomer-Array zu hybridisierenden Abschnitte nicht von komplementären Strängen blockiert werden. Diese Verfahren stellen nicht nur einen zusätzlichen Schritt dar, sondern sie sind auch speziell im Falle des Biotins teuer und im Falle enzymatischer Reaktionen oftmals schlecht reproduzierbar. Sollen beide Stränge jedoch durch den Oligomer-Array nachgewiesen werden, so kommt ohnehin nur die thermische Denaturierung in Frage. Das Problem dabei ist jedoch das sogenannte Reannealing, das heißt daß die komplementären Stränge nach dem Denaturieren wiederum miteinander hybridisieren, was schneller als eine Hybridisierung mit Oligomeren auf dem Chip erfolgen kann. Dieses Problem wird auch durch einmalige Denaturierung nicht gelöst. Wird dagegen in der Kammer denaturiert, so werden bereits an den Oligomer Array hybridisierte DNA-Fragmente ebenfalls wieder abgelöst.

In der WO 98/28438 wird eine weitere Hybridisierungskammer zur Bestimmung von Nukleinsäuren beschreiben, bei der zwar die Flüssigkeiten zylisch durch eine Pumpe bewegt werden, jedoch kein separates Kühlelement vorhanden ist. Ob mit einer solchen Vorrichtung erreicht werden kann, dass eine größere Menge einer ansonsten doppelsträngigen DNA-Probe für Hydrisierungen auf einem Oligomer- Array in einzelsträngiger Form vorliegt, erscheint zumindest zweifelhat.

Aufgabe der vorliegenden Erfindung ist es daher, eine Vorrichtung zu schaffen, welche die Nachteile des Standes der Technik überwindet und eine effektive Hybridisierung von doppelsträngigen DNA-Proben ermöglicht.

Die Aufgabe wird durch die Merkmale des Anspruchs 1 gelöst. Vorteilhafte Ausgestaltungen sind in den abhängigen Unteransprüchen gekennzeichnet.

Die Aufgabe wird also durch eine Vorrichtung zur Hybridisierung doppelsträngiger DNA-Proben an Oligomer-Arrays (Oligomer-Chips) gelöst, umfassend mindestens eine in zwei Richtungen fördernde Pumpe, eine geschlossene Hybridisierungskammer, ein Kühlelement und ein Heizelement, wobei die einzelnen Komponenten in der oben genannten Reihenfolge jeweils miteinander durch Flüssigkeiten fördernde Leitungswege verbunden sind.

Die hier beschriebene Vorrichtung ermöglicht ein periodisches Denaturieren der DNA-Probe, ohne eine Ablösung bereits an Oligomere hybridisierter DNA zu erzeugen und überwindet damit die im Stand der Technik erwähnten Probleme. Dadurch, daß die DNA-Probe vor dem Aufbringen auf den Chip thermisch denaturiert und dann plötzlich abgekühlt wird, liegt sie bei Kontaktierung mit dem Chip überwiegend in einzelsträngiger Form vor. Damit steht ein großer Teil der ansonsten doppelsträngigen DNA-Probe für Hybridisierungen mit dem Oligomer-Array zur Verfügung. Durch Hin- und Herpumpen der Probenflüssigkeit stellt die Vorrichtung sicher, daß dieser Vorgang so häufig wiederholt wird, bis ein ausreichender Teil der doppelsträngigen DNA-Probe an die Oligomere des Chips hybridisiert hat. Zugleich findet durch diesen Prozeß ein Mischen in der Kammer während der Hybridisierungsphase statt.

Erfindungsgemäß ist bevorzugt, daß die Pumpe eine peristaltische Pumpe, eine Schlauchpumpe oder eine Kolbenpumpe ist. Die Pumpe soll in der Lage sein, kleine Flüssigkeitsmengen präzise in Saug- und Druckrichtung zu fördern. Dies kann erfindungsgemäß auch durch eine dem Fachmann bekannte Schaltung mittels Ventilen, wie Mehrwegventilen erfolgen, welche ihrerseits wieder extern ansteuer- und/oder regelbar sind.

Besonders bevorzugt ist es dabei, daß die Pumpe programmierbar oder durch ein Computer gesteuert ist. Derartige Steuerungen und/oder Computerprogramme sind dem Fachmann an sich bekannt.

Erfindungsgemäß bevorzugt ist es ferner, daß die Hybridisierungskammer mindestens einen Deckel, mit durch diesen hindurch geführten Ein-/Auslaßkanälen, und einen Temperierblock, mit einem darauf auflegbaren oder festlegbaren Oligomer-Array, umfaßt.

Dabei ist insbesondere bevorzugt, daß weiterhin ein Kühlkörper vorhanden ist, auf welchem der Temperierblock angeordnet ist.

Erfindungsgemäß bevorzugt ist ferner eine Vorrichtung, wobei das Volumen der Hybridisierungskammer bei eingelegtem Oligomer-Chip weniger als 200 µl beträgt.

Besonders vorteilhaft ist es, daß die Hybridisierungskammer für die Aufnahme handelsüblicher Objektträger oder Mikroskopobjekträger vorgerichtet ist.

Erfindungsgemäß bevorzugt ist es auch, daß das Kühlelement den Leitungsweg fest umschließt.

Bevorzugt ist es ferner, daß das Heizelement den Leitungsweg fest umschließt und daß der Leitungsweg mit seinem offenen Ende aus dem Heizelement herausragt. Dabei ist es alternativ bevorzugt, daß das Heizelement ein Probengefäß mindestens teilweise umschließt und das der Leitungsweg mit seinem offenen Ende in die in dem Probengefäß vorhandenen Probenlösung eintaucht und daß dieser Leitungsweg gegebenenfalls bis auf die Innenseite des Bodens des Probengefäßes geführt ist.

Bevorzugt ist es ferner, daß die Leitungswege Schläuche sind und vorzugsweise aus einem inerten Material, Silikonkautschuken, Polytetrafluorethylen, Polyvinylchlorid, Polyethylen und/oder Edelstahl bestehen. Auch andere inerte Materialien kommen in Frage und sind dem Fachmann bekannt.

Ganz besonders bevorzugt ist es, daß die Hybridisierungskammer, das Kühlelement, das Heizelement und der Temperierblock unabhängig voneinander temperierbar sind.

Bevorzugt ist es ferner, daß der Temperierblock der Hybridisierungskammer gleichzeitig als Kühlelement ausgebildet ist.

Es ist weiterhin bevorzugt, daß das Volumen der Leitungswege zwischen dem Heizelement und dem Einlaßkanal der Hybridisierungskammer kleiner als das Volumen der Hybridisierungskammer selbst ist.

Die vorliegende Erfindung wird an Hand der beigefügten Abbildungen näher erläutert.

Es zeigen:
Fig. 1a eine schematische Darstellung einer erfindungsgemäßen Vorrichtung in einem ersten Ausführungsbeispiel,
Fig. 1b eine schematische Darstellung einer erfindungsgemäßen Vorrichtung in einem zweiten Ausführungsbeispiel und
Fig. 2 eine perspektivische Ansicht einer Ausführungsform einer erfindungsgemäßen Hybridisierungskammer.

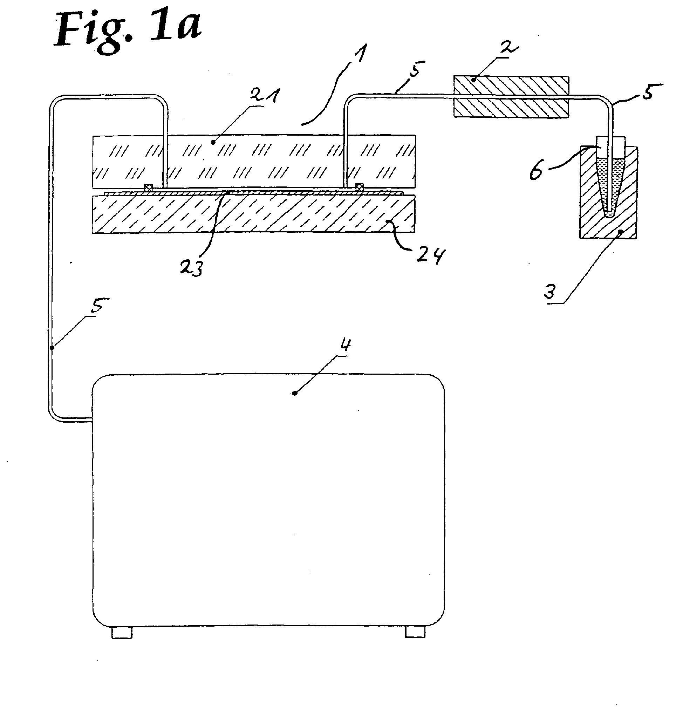

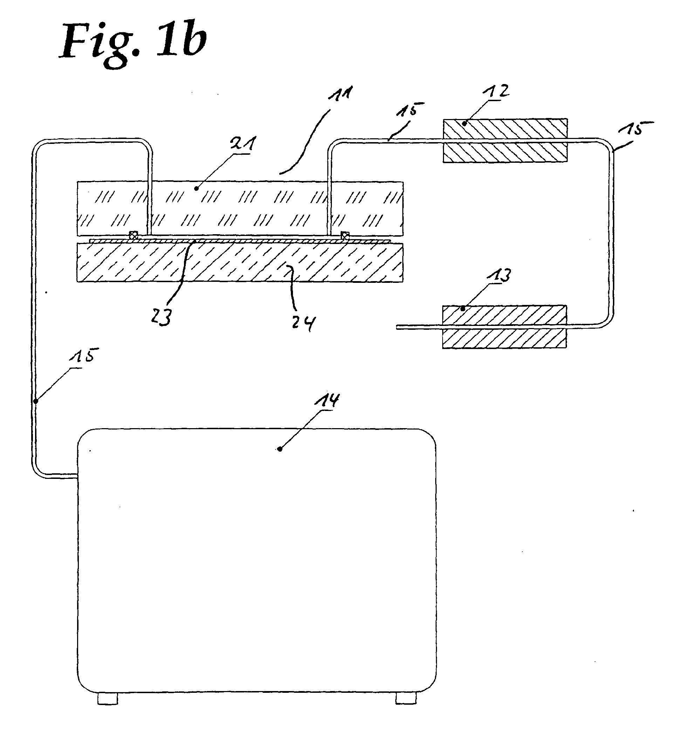

Gegenstand der vorliegenden Erfindung ist eine wie in Fig. 1a/b schematisierte Vorrichtung zur Hybridisierung doppelsträngiger DNA-Proben an Oligomer-Arrays (Oligomer-Chips). Sie besteht aus einer geschlossenen und temperierbaren Hybridisierungskammer 1, 11, einer Pumpe 4, 14, einem Heizelement 3, 13 und einem Kühlelement 2,12, die jeweils miteinander durch Flüssigkeit fördernde Leitungswege 5, 15, bevorzugt Kunststoffschläuche verbunden sind.

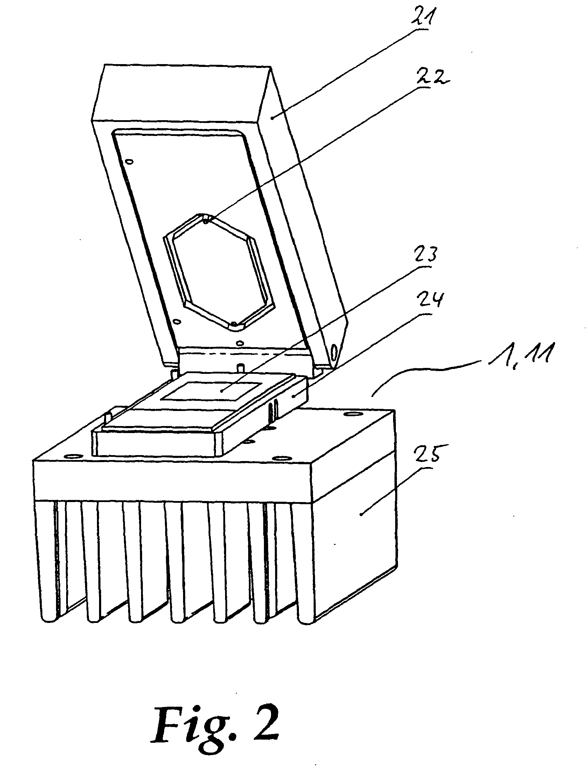

Die Hybridisierungskammer 1, 11 (Fig. 2) besteht bevorzugt aus zwei Teilen, einer Schale zur Aufnahme der Oligomer-Arrays 23 und einem Deckel 21, die bevorzugt durch einen Klappmechanismus aufeinandergedrückt werden können. Im Deckel befindet sich bevorzugt eine Aussparung für eine Dichtung, welche die Seitenwände der Kammer bildet. Der Deckel enthält auch die Durchführungen 22 für die Schlauchanschlüsse 5, 15 oder andere Förderkanäle für Flüssigkeiten. Die Kammer ist bevorzugt durch ein Peltier-Element temperierbar.

Bei der Pumpe handelt es sich bevorzugt um eine nach peristaltischem Prinzip arbeitende Schlauchpumpe oder aber um eine Kolbenpumpe, die zur automatisierten Durchführung des Verfahrens selbst programmierbar ist oder aber bevorzugt durch einen PC angesteuert werden kann. Die Probe wird zyklisch durch die Pumpe bewegt und zuerst im Heizelement denaturiert, im Kühlelement gekühlt und nachfolgend in der Hybridisierungskammer hybridisiert. Danach wird sie wieder in den Heizblock gepumpt und denaturiert. Dieser Vorgang wird zyklisch wiederholt und die Vorrichtung kann bevorzugt beliebig viele, mindestens aber zwei solche Zyklen automatisiert hintereinander durchführen.

Das Heizelement wie auch das Kühlelement bestehen bevorzugt aus je einem Metallblock, dessen Temperatur besonders bevorzugt durch ein Peltier-Element geregelt wird. In einer bevorzugten Variante umschließen sowohl das Heizelement wie auch das Kühlelement jeweils einen Schlauch, durch den die Probenlösung gefördert wird. Alternativ kann das Heizelement ein Gefäß aufnehmen, bevorzugt aus Kunststoff bestehend (z. B. "Eppendorf-Cup"). Der Schlauch oder ein anderer Kanal reicht in diesem Fall bis auf den Boden dieses Gefäßes, um dort die Probenflüssigkeit anzusaugen. Die DNA-Probe kann so zum Kühlelement und zur Hybridisierungskammer gefördert werden. In einer weiteren Variante der Erfindung wird kein Kühlelement verwendet, sondern die schnelle Abkühlung der im Heizelement erhitzten Probe erfolgt durch den Kontakt mit der temperierten Hybridisierungskammer.

Die Hybridisierungskammer kann Oligomer-Chips aufnehmen, auf denen Oligonukleotide und/oder PNA-Oligomere (Peptide Nucleic Acids) immobilisiert sind. In einer besonders bevorzugten Variante nimmt die Hybridisierungskammer handelsübliche Objektträger auf, wie sie auch in der Mikrokopie verwendet werden. Besonders bevorzugt beträgt das Volumen, das die Hybridisierungskammer bei eingelegtem Oligomer-Chip faßt, weniger als 200 µl.

Ein Gegenstand der vorliegenden Erfindung ist auch ein Verfahren zur Hybridisierung doppelsträngiger DNA-Proben an Oligomer-Arrays unter Verwendung einer erfindungsgemäßen Vorrichtung.

Ein weiterer Gegenstand der vorliegenden Erfindung ist somit ein Verfahren zur Hybridisierung doppelsträngiger DNA-Proben an Oligomer-Arrays (Oligomer-Chips), wobei man eine erfindungsgemäße Vorrichtung wie vorstehend beschrieben verwendet und wobei man die DNA-Probe zyklisch durch die Pumpe bewegt und zuerst im Heizelement denaturiert, im Kühlelement kühlt und nachfolgend in der Hybridisierungskammer hybridisiert und dann wieder in dem Heizelement denaturiert, wobei man mindestens zwei solcher Zyklen automatisiert nacheinander durchführt.

Ein weiterer Gegenstand der vorliegenden Erfindung ist ein Kit, umfassend eine wie oben beschriebene Vorrichtung zur Hybridisierung doppelsträngiger DNA-Proben an Oligonucleotid-Arrays und einen oder mehrere Oligomer-Arrays oder Biochips und/oder Dokumentation zur Verwendung der Vorrichtung und/oder Pufferlösungen zur Durchführung der Hybridisierungen.

### Bezugszeichenliste

- 1, 11: Hybridisierungskammer
- 2, 12: Kühlelement
- 3, 13: Heizelement
- 4, 14: Pumpe
- 5, 15: Leitungswege
- 6: Probengefäß
- 21: Deckel
- 22: Ein-/Auslaßkanäle
- 23: Oligomer-Array
- 24: Temperierblock
- 25: Kühlkörper

## Patentansprüche

1. Vorrichtung zur Hybridisierung doppelsträngiger DNA-Proben an Oligomer-Arrays (Oligomer-Chips) umfassend mindestens eine in zwei Richtungen fördernde Pumpe (4, 14), eine geschlossene Hybridisierungskammer (1, 11), ein Kühlelement (2, 12) und ein Heizelement (3, 13), wobei die einzelnen Komponenten in der oben genannten Reihenfolge jeweils miteinander durch Flüssigkeiten fördernde Leitungswege (5, 15) verbunden sind.

2. Vorrichtung nach Anspruch 1, **dadurch gekennzeichnet, daß** die Pumpe (4, 14) eine peristaltische Pumpe, eine Schlauchpumpe oder eine Kolbenpumpe ist.

3. Vorrichtung nach einem der voranstehenden Ansprüche, **dadurch gekennzeichnet, daß** die Pumpe (4, 14) programmierbar oder durch ein Computer gesteuert ist.

4. Vorrichtung nach einem der voranstehenden Ansprüche, **dadurch gekennzeichnet, daß** die Hybridisierungskammer (1, 11) mindestens einen Deckel (21), mit durch diesen hindurch geführten Ein-/Auslaßkanälen (22), und einen Temperierblock (24), mit einem darauf auflegbaren oder festlegbaren Oligomer-Array (23), umfaßt.

5. Vorrichtung gemäß Anspruch 4, **dadurch gekennzeichnet, daß** weiterhin Kühlkörper (25) vorhanden ist, auf welchem der Temperierblock (24) angeordnet ist.

6. Vorrichtung nach einem der voranstehenden Ansprüche, **dadurch gekennzeichnet, daß** das Volumen der Hybridisierungskammer (1, 11) bei eingelegtem Oligomer-Chip weniger als 200 µl beträgt.

7. Vorrichtung nach einem der voranstehenden Ansprüche, **dadurch gekennzeichnet, daß** die Hybridisierungskammer (1, 11) für die Aufnahme handelsüblicher Objektträger oder Mikroskopobjekträger vorgerichtet ist.

8. Vorrichtung nach einem der voranstehenden Ansprüche, **dadurch gekennzeichnet, daß** das Kühlelement (2, 12) den Leitungsweg (5, 15) fest umschließt.

9. Vorrichtung nach einem der voranstehenden Ansprüche, **dadurch gekennzeichnet, daß** das Heizelement (3, 13) den Leitungsweg (5, 15) fest umschließt und daß der Leitungsweg (5, 15) mit seinem offenen Ende aus dem Heizelement herausragt.

10. Vorrichtung nach einem der Ansprüche 1 bis 8, **dadurch gekennzeichnet, daß** das Heizelement (3, 13) ein Probengefäß (6) mindestens teilweise umschließt und das der Leitungsweg (5, 15) mit seinem offenen Ende in die in dem Probengefäß (6) vorhandenen Probenlösung eintaucht und daß dieser Leitungsweg (5, 15) gegebenenfalls bis auf die Innenseite des Bodens des Probengefäßes (6) geführt ist.

11. Vorrichtung nach einem der voranstehenden Ansprüche, **dadurch gekennzeichnet, daß** die Leitungswege (5, 15) Schläuche sind und vorzugsweise aus einem inerten Material, Silikonkautschuken, Polytetrafluorethylen, Polyvinylchlorid, Polyethylen und/oder Edelstahl bestehen.

12. Vorrichtung nach einem der voranstehenden Ansprüche, **dadurch gekennzeichnet, daß** die Hybridisierungskammer (1, 11), das Kühlelement (2, 12), das Heizelement (3, 13) und der Temperierblock (24) unabhängig voneinander temperierbar sind.

13. Vorrichtung nach einem der voranstehenden Ansprüche, **dadurch gekennzeichnet, daß** der Temperierblock (24) der Hybridisierungskammer (1, 11) gleichzeitig als Kühlelement (2, 12) ausgebildet ist.

14. Vorrichtung nach einem der voranstehenden Ansprüche, **dadurch gekennzeichnet, daß** das Volumen der Leitungswege (5, 15) zwischen dem Heizelement (3, 13) und dem Einlaßkanal (22) der Hybridisierungskammer (1, 11) kleiner als das Volumen der Hybridisierungskammer (1, 11) selbst ist.

15. Verfahren zur Hybridisierung doppelsträngiger DNA-Proben an Oligomer-Arrays (Oligomer-Chips), wobei man eine Vorrichtung gemäß einem der voranstehenden Ansprüche verwendet und wobei man die DNA-Probe zyklisch durch die Pumpe bewegt und zuerst im Heizelement denaturiert, im Kühlelement kühlt und nachfolgend in der Hybridisierungskammer hybridisiert und dann wieder in dem Heizelement denaturiert, wobei man mindestens zwei solcher Zyklen automatisiert nacheinander durchführt.

## Claims

1. A device for hybridizing double-stranded DNA samples to oligomer arrays (oligomer chips) comprising at least one pump (4, 14) transporting in two directions, a closed hybridization chamber (1, 11), a cooling element (2, 12) and a heating element (3, 13), whereby the individual components are connected in the above-named sequence each time with one another by pathways (5, 15) for transporting fluids.

2. The device according to claim 1, further **characterized in that** pump (4, 14) is a peristaltic pump, a hose pump or a piston pump.

3. The device according to one of the preceding claims, further **characterized in that** the pump (4, 14) is programmable or is controlled by a computer.

4. The device according to one of the preceding claims, further **characterized in that** hybridization chamber (1, 11) comprises at least one cover (21) with inlet/outlet channels (22) passing through this cover, and a tempering block (24) with an oligomer array (23) that can be applied or fixed thereon.

5. The device according to claim 4, further **characterized in that** a cooling unit (25) is also present, on which the tempering block (24) is arranged.

6. The device according to one of the preceding claims, further **characterized in that** the volume of hybridization chamber (1, 11) amounts to less than 200 µl with an inserted oligomer chip.

7. The device according to one of the preceding claims, further **characterized in that** the hybridization chamber (1, 11) is equipped for taking up conventional specimen carriers or microscope slides.

8. The device according to one of the preceding claims, further **characterized in that** the cooling element (2, 12) tightly surrounds the pathway (5, 15).

9. The device according to one of the preceding claims, further **characterized in that** heating element (3, 13) tightly surrounds pathway (5, 15) and that pathway (5, 15) projects from the heating element by its open end.

10. The device according to one of claims 1 to 8, further **characterized in that** the heating element (3, 13) at least partially surrounds a sample vessel (6) and that pathway (5, 15) by its open end is immersed in the sample solution present in the sample vessel (6) and that this pathway (5, 15) is optionally guided down to the bottom of the sample vessel (6) on the inside.

11. The device according to one of the preceding claims, further **characterized in that** pathways (5, 15) are tubings and preferably comprised of an inert material, silicone rubbers, polytetrafluoroethylene, polyvinyl chloride, polyethylene, and/or special steel.

12. The device according to one of the preceding claims, further **characterized in that** the hybridization chamber (1, 11), the cooling element (2, 12), the heating element (3, 13) and the tempering block (24) can be temperature-controlled independent of one another.

13. The device according to one of the preceding claims, further **characterized in that** tempering block (24) of hybridization chamber (1, 11), is formed simultaneously as cooling element (2, 12).

14. The device according to one of the preceding claims, further **characterized in that** the volume of pathways (5, 15) between the heating element (3, 13) and the inlet channel (22) to the hybridization chamber (1, 11) is smaller than the volume of the hybridization chamber (1, 11) itself.

15. A method for hybridizing double-stranded DNA samples to oligomer arrays (oligomer chips), whereby a device according to one of the preceding claims is used and whereby the DNA sample is moved cyclically via the pump and is first denatured in the heating element, then cooled in the cooling element, and subsequently hybridized in the hybridization chamber and is then again denatured in the heating element, whereby at least two such cycles are conducted automatically one after the other.

## Revendications

1. Dispositif d'hybridation d'échantillons d'ADN à deux brins sur des jeux ordonnés d'oligomères (puces d'oligomères), qui comprend au moins une pompe (4, 14) qui refoule dans deux directions, une chambre fermée d'hybridation (1, 11), un élément de refroidissement (2, 12) et un élément de chauffage (3, 13), des conduits (5, 15) de transport de liquide reliant les uns aux autres les différents composants dans l'ordre cité ci-dessus.

2. Dispositif selon la revendication 1, **caractérisé en ce que** la pompe (4, 14) est une pompe péristaltique, une pompe à tuyau flexible ou une pompe à piston.

3. Dispositif selon l'une des revendications précédentes, **caractérisé en ce que** la pompe (4, 14) peut être programmée ou est commandée par un ordinateur.

4. Dispositif selon l'une des revendications précédentes, **caractérisé en ce que** la chambre d'hybridation (1, 11) comprend au moins un couvercle (21) que traversent des canaux d'entrée et de sortie (22) et un bloc de contrôle de température (24) sur lequel on peut poser ou fixer un jeu ordonné (23) d'oligomères.

5. Dispositif selon la revendication 4, **caractérisé en ce qu'**il présente en outre un corps de refroidissement (25) sur lequel est agencé le bloc de contrôle de température (24).

6. Dispositif selon l'une des revendications. précédentes, **caractérisé en ce que** le volume de la chambre d'hybridation (1, 11) est inférieur à 200 µl lorsque la puce d'oligomère y est introduite.

7. Dispositif selon l'une des revendications précédentes, **caractérisé en ce que** la chambre d'hybridation (1, 11) est prévue pour recevoir des porte-objets ou des porte-objets pour microscope disponibles dans le commerce.

8. Dispositif selon l'une des revendications précédentes, **caractérisé en ce que** l'élément de refroidissement (2, 12) entoure fixement le conduit (5, 15).

9. Dispositif selon l'une des revendications précédentes, **caractérisé en ce que** l'élément de chauffage (3, 13) entoure fixement le conduit (5, 15) et **en ce que** l'extrémité ouverte du conduit (5, 15) sort de l'élément de chauffage.

10. Dispositif selon l'une des revendications 1 à 8, **caractérisé en ce que** l'élément de chauffage (3, 13) entoure au moins partiellement un récipient (6) à échantillon, l'extrémité ouverte du conduit (5, 15) plongeant dans une solution d'échantillon présente dans le récipient (6) à échantillon et **en ce que** ce conduit (5, 15) va éventuellement jusqu'au côté intérieur du fond du récipient (6) à échantillon.

11. Dispositif selon l'une des revendications précédentes, **caractérisé en ce que** les conduits (5, 15) sont des tuyaux de préférence en un matériau inerte, en caoutchouc siliconé, en polytétrafluoroéthylène, en chlorure de polyvinyle, en polyéthylène et/ou en acier allié.

12. Dispositif selon l'une des revendications précédentes, **caractérisé en ce que** les températures de la chambre d'hybridation (1, 11), de l'élément de refroidissement (2, 12), de l'élément de chauffage (3, 13) et du bloc de contrôle de température (24) peuvent être contrôlées indépendamment.

13. Dispositif selon l'une des revendications précédentes, **caractérisé en ce que** le bloc de contrôle de température (24) de la chambre d'hybridation (1, 11) est en même temps configuré comme élément de refroidissement (2, 12).

14. Dispositif selon l'une des revendications précédentes, **caractérisé en ce que** le volume des conduits (5, 15) présents entre l'élément de chauffage (3, 13) et le canal d'entrée (22) de la chambre d'hybridation (1, 11) est inférieur au volume de la chambre d'hybridation (1, 11) elle-même.

15. Procédé d'hybridation d'échantillons d'ADN à deux brins sur des jeux ordonnés d'oligomères (puces d'oligomères), dans lequel on utilise un dispositif selon l'une des revendications précédentes et dans lequel on déplace les échantillons d'ADN de manière cyclique au moyen de la pompe et on les dénature d'abord dans l'élément de chauffage, on les refroidit dans l'élément de refroidissement, on les hybride dans la chambre d'hybridation et on les dénature à nouveau dans l'élément de chauffage, au moins deux de ces cycles étant exécutés l'un après l'autre et de manière automatisée.
